# EUROPÄISCHE PATENTANMELDUNG

(11) **EP 0 908 650 A1**
(43) Veröffentlichungstag der Anmeldung: **14.04.1999**
(21) Anmeldenummer: 98113160.0
(22) Anmeldetag: 15.07.1998
(51) Int. Cl.: F16J 15/32

(54) **Dichtring**

(30) Priorität: 09.10.1997 DE 19744592
(71) Anmelder: Firma Carl Freudenberg, 69469 Weinheim (DE)
(72) Erfinder: Chiolerio, Emilio, 10064 Pinerolo (TO) (IT); Vignolo, Francesco, 10060 Bibiana (TO) (IT)

(57) **Zusammenfassung**

Dichtring für eine Welle oder Stange, umfassend einen Halteflansch (1), der mit einer sich quer zu der Welle oder Stange (2) erstreckenden Wand (3) verschraubbar ist und einen Lippenring (4) aus polymerem Werkstoff, der mit dem Halteflansch (1) verbunden ist, wobei der Halteflansch (1) und der Lippenring (4) vor der Verschraubung mittels eines abnehmbaren Zentrierrings (5) durch die Welle oder Stange (2) zentrierbar ist.

## Beschreibung

### Technisches Gebiet

Die Erfindung betrifft einen Dichtring für eine Welle oder Stange, umfassend einen Halteflansch, der mit einer sich quer zu der Welle oder Stange erstreckenden Wand verschraubbar ist sowie einen Lippenring aus polymerem Werkstoff, der mit dem Halteflansch verbunden ist.

### Stand der Technik

Ein solcher Dichtring ist bekannt. Er gelangt beispielsweise bei der Abdichtung der Kurbelwelle einer Verbrennungskraftmaschine zur Anwendung und wird üblicherweise unter Zwischenfügung eines Dichtmittels mit der Stirnwand der Verbrennungskraftmaschine verschraubt. Die dabei zur Anwendung gelangenden Schrauben haben einen geringeren Durchmesser als die sie aufnehmenden Durchbrechungen des Halteflansches, was zu einer radialen Verschiebung des Lippenringes, bezogen auf die Achse der abzudichtenden Welle führen kann. Die zwangsläufige Folge hiervon ist, daß der Lippenring die abzudichtende Welle nicht mehr entlang eines Linienzuges berührt, der der Dichtungsachse auf dem ganzen Umfang in einer übereinstimmenden Radialebene umschließt, die sich senkrecht zur Achse erstreckt, sondern in einer gedachten Ebene, die der Dichtungsachse schräg zugeordnet ist. Undichtigkeiten und erhöhter Verschleiß sind davon die Folge.

### Darstellung der Erfindung

Der Erfindung liegt die Aufgabe zugrunde, einen solchen Dichtring derart weiterzuentwickeln, daß eine konzentrische Zuordnung des Halteflansches und Lippenringes zu der Welle oder Stange problemlos sichergestellt und kontrolliert werden kann. Wenn an dem Lippenring eine durch zwei einander durchschneidende Kegelflächen gebildete Dichtkante vorgesehen ist, soll somit erreicht werden, daß die Dichtkante die Welle oder Stange auf dem ganzen Umfang in einer übereinstimmenden, sich senkrecht zur Achse erstreckenden Radialebene berührt.

Diese Aufgabe wird erfindungsgemäß bei einem Dichtring der eingangs genannten Art mit den kennzeichnenden Merkmalen von Anspruch 1 gelöst und auf vorteilhafte Ausgestaltungen nehmen die Unteransprüche bezug.

Bei dem erfindungsgemäßen Dichtring ist es vorgesehen, daß der Halteflansch und der Lippenring mittel eines abnehmbaren Zentrierrings durch die Welle oder Stange vor der Öffnung einer sich senkrecht zu der Welle oder Stange erstreckenden Wand zentrierbar sind. Der Zentrierring besteht aus einem unter den Bedingungen der Montage unverformbaren Werkstoffkörper und wird mit dem Dichtring gemeinsam auf die Welle oder Stange aufgeschoben, wodurch der Halteflansch und der Lippenring der Welle konzentrisch zugeordnet ist. In der so erreichten Lage wird eine Fixierung des Dichtringes, bezogen auf die Öffnung der Wand, durch Einfügen und Anziehen der erforderlichen Schrauben bewirkt. Im Anschluß daran kann der Zentrierring durch axiales Abziehen von der Welle oder Stange entfernt und der Dichtring in Betrieb genommen werden. Wenn an dem Dichtring eine Dichtkante vorgesehen ist wird hierdurch bewirkt, daß die Dichtkante den Außenumfang der Welle oder Stange in einer übereinstimmenden, sich senkrecht zu der Welle oder Stange erstreckenden Radialebene berührt.. Erhöhter Verschleiß oder vorzeitiger Ausfall bzw. Undichtigkeiten des Dichtringes wegen fehlerhafter Zuordnung zur Welle oder Stange sind hierdurch nicht mehr zu befürchten.

Als zweckmäßig hat es sich erwiesen, wenn der Halteflansch und/ oder der Lippenring mit zumindest einer umlaufenden Zentrierfläche und der Zentrierring mit zumindest einer dazu passenden Gegenfläche versehen ist. Die Herstellung und konzentrische Zuordnung der Zentrierfläche und der Gegenfläche zur Dichtungsachse ist dadurch ganz besonders einfach.

Die Zentrierfläche kann auf den Bereich radial innerhalb des Halteflansches beschränkt sein oder sich bis in diesen Bereich erstrecken und dort nur durch eine dünne Schicht aus polymerem Werkstoff von dem Halteflansch getrennt sein. Die Qualität der konzentrischen Zuordnung zu dem Halteflansch und damit zu dem Lippenring läßt sich hierdurch wesentlich verbessern.

Der Halteflansch besteht aus einem bei normaler Benutzung unverformbarem Werkstoff, beispielsweise aus einem tiefgezogenen Stahlblech, und eignet sich dadurch ganz besonders gut zur Führung.

Der Zentrierring läßt sich besonders einfach in die Zentrierfläche einfügen, wenn diese und die dazugehörige Gegenfläche des Zentrierrings kegelig gestaltet und trichterartig ineinander einfügbar sind. Die Kegelwinkel beider Flächen sollten bei solchen Ausführungen nur etwa 1 bis 5 ° betragen, um sicherzustellen, daß bei einer leichten Zusammenfügbarkeit der Teile einerseits eine hinreichend gute Haftung der Gegenfläche an der Zentrierfläche erreicht wird und andererseits eine hinreichend gute Ablösbarkeit voneinander, um eine problemlose Entfernung des Zentrierrings im Anschluß an die Montage des Dichtrings zu ermöglichen.

Der Zentrierring kann auch mittels einer Schnappverbindung unverlierbar an dem Haltering und/ oder dem Lippenring festlegbar sein. Entsprechende Schnappverbindungen sind bekannt. Sie bestehen im allgemeinen aus vorstehenden Rippen oder Nocken der einen Fläche, die mit einer entsprechenden Eintiefungen oder einer Nut der Gegenfläche in Eingriff bringbar sind. Die beiden Elemente können gegebenenfalls ein Bestandteil der Zentrierfläche und der Gegenfläche bilden.

Der Zentrierring kann an sich aus irgendeinem Werkstoff bestehen, der eine hinreichend große Formbeständigkeit hat. Hartkunststoffe sind besonders geeignet, beispielsweise Polypropylen. Im Bereich des vorderen Endes des Zentrierrings ist zweckmäßig eine hohlkegelige Erweiterung des Innendurchmessers vorgesehen, um das Aufschieben auf das Ende der abzudichtenden Welle bzw. Stange zu erleichtern.

Die Erfindung betrifft ferner einen Einbausatz, umfassend einen Dichtring und einen davon ablösbaren Zentrierring der vorstehend angegebenen Art. Ein solcher Einbausatz läßt sich besonders einfach handhaben und in der Massenfertigung von Kfz-Motoren und ähnlichem unter Verwendung von Montagerobotem verwenden.

### Kurzbeschreibung der Zeichnungen

Die Erfindung wird nachfolgend anhand der beigefügten Zeichnungen weiter verdeutlicht. Es zeigen:
- Figur 1: die Einzelteile des Dichtrings vor dem Einfügen des Zentrierrings,
- Figur 2: der gebrauchsfertige Dichtring beim Aufschieben auf eine Welle,
- Figur 3: der gebrauchsfertige Dichtring nach dem Einfügen und Anziehen der den Halteflansch mit der Wand verbindenden Schrauben,
- Figur 4: der gebrauchsfertige Dichtring nach dem anschließenden Entfernen des Zentrierrings.

### Ausführung der Erfindung

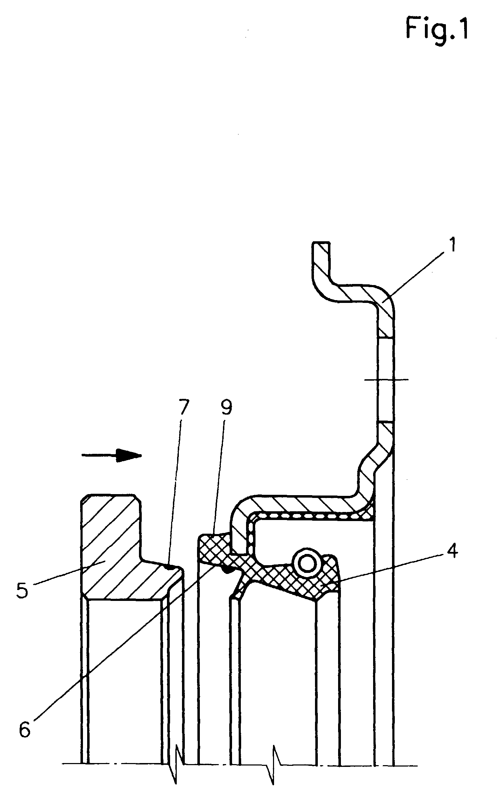

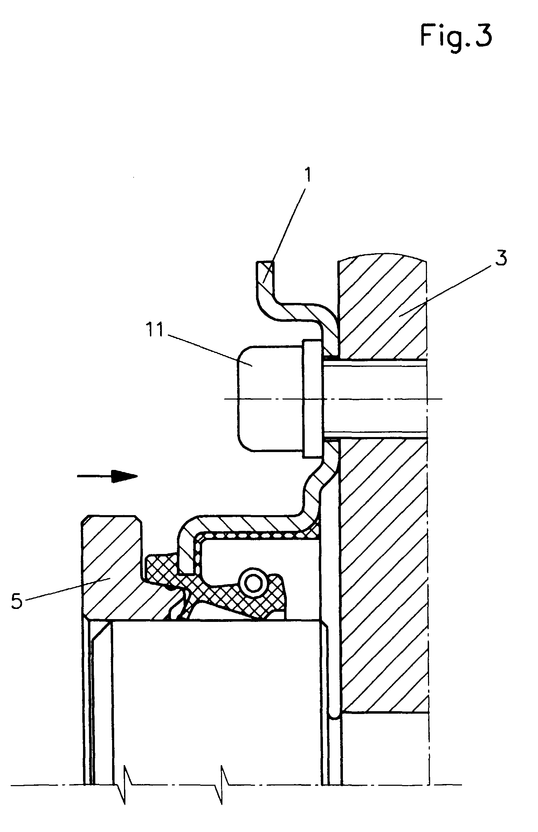

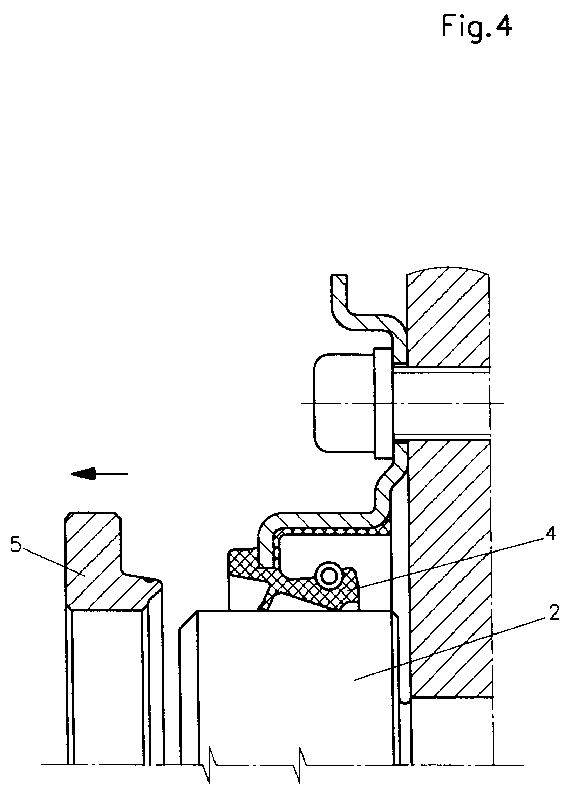

Der in Figur 1 bis 4 gezeigte Dichtring ist für die Abdichtung einer rotierenden Welle bestimmt, beispielsweise der Kurbelwelle einer Verbrennungskraftmaschine. Er umfaßt einen Halteflansch 1, der mit einer sich quer zu der Welle oder Stange 2 erstreckenden Wand 3 verschraubbar ist und einen Lippenring 4 aus polymerem Werkstoff, beispielsweise aus Gummi, der unlösbar und flüssigkeitsdicht mit dem Halteflansch 1 verbunden ist. Der Halteflansch 1 und der Lippenring 4 werden durch einen Zentrierring 5 ergänzt, der in den Lippenring 4 einfügbar ist und durch die kegelige Ausbildung der Berührungsflächen eine gute Konzentrizität der beiden Teile gewährleistet, ohne daß es einer großen Maßhaltigkeit bedarf. Hierdurch gelingt es besonders einfach, den Dichtring während der Montage, bezogen auf die abzudichtende Welle oder Stange 2 exakt zu zentrieren. Das Einfügen des Zentrierrings 5 in die Zentrierfläche 6 ist durch eine übereinstimmende, kegelige Ausbildung der Berührungsflächen erleichtert. Eine zylindrische Ausbildung ist selbstverständlich ebenfalls möglich, erfordert aber einer verbesserte Maßhaltigkeit der beiden Teile.

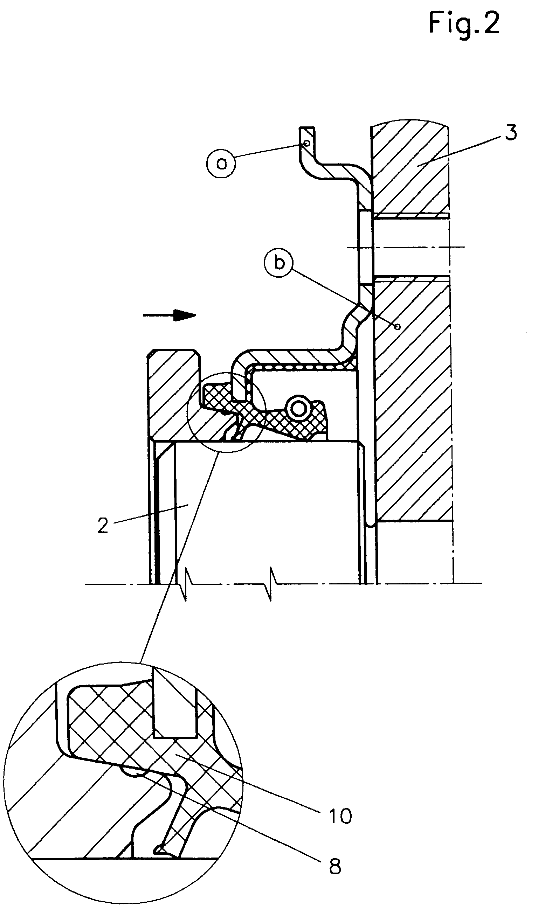

Der Montagevorgang als solcher wird in Figur 2 gezeigt. In einen in axialer Richtung weisenden Vorsprung 9 des Lippenrings ist der Zentrierring 5 eingefügt, wobei die Zentrierfläche 6 des Lippenringes 4 und die Gegenfläche 7 des Zentrierrings miteinander in Eingriff gelangen. Beide Flächen haben einen kegelig in der gleichen Richtung erweiterten Durchmesser und sind trichterartig ineinander einfügbar. Der Kegelwinkel beträgt 3°.

Im vergrößerten Ausschnitt der Darstellung gemäß Figur 2 ist zu ersehen, daß auf der Zentrierfläche 6 ein radial nach innen weisender Vorsprung vorgesehen ist, der unter Bildung einer Schnappverbindung 8 mit einer entsprechend geformten Nut der Gegenfläche 7 des Zentrierrings 5 in Eingriff bringbar ist. Der Dichtring und der Zentrierring 5 bilden dadurch während der Handhabung und des Transports eine unverlierbar aneinander festgelegte Einheit, sind aber nach der Montage auf der Welle oder Stange durch die Nachgiebigkeit der Schnappverbindung hinreichend leicht von einnder trennbar.

Im zusammengefügten Zustand wird die in radialer Richtung am weitesten nach innen weisende Fläche des Halteflansches 1 von dem Zentrierring 5 in axialer Richtung teilweise übergriffen, wobei die beiden einander gegenüberliegenden Flächen nur durch einen Gummifilm 10 von verhältnismäßig geringer Dicke von einander getrennt sind. Der Halteflansch 1 wird dadurch beim Auffügen des den Zentrierring 5 enthaltenden Dichtrings auf die abzudichtende Welle 2 in besonders präziser Weise durch die Welle radial geführt, was die Entstehung einer radial gerichteten Dejustiierung weitestgehend ausschließt. Die zur Festlegung des Dichtrings an der sich senkrecht zu deren Längsrichtung erstreckenden Wand 3 benötigten Schrauben 11 können dadurch leicht in die hierfür vorgesehenen Bohrungen eingefügt und der Halteflansch 1 unverrrückbar an der Wand 3 festgelegt werden. Im Anschluß daran ist es möglich, den Zentrierring 5 in axialer Richtung von der abzudichtenden Welle 2 abzuziehen, wonach sich der Dichtring in gebrauchsfertigem Zustand befindet. Der Lippenring 4 umschließt die abzudichtende Welle 2 entlang eines Dichtbandes, welche der Dichtungsachse unter einem rechten Winkel zugeordnet ist. Undichtigkeiten oder vorzeitigem Verschleiß der Dichtung wird dadurch vorgebeugt.

## Patentansprüche

1. Dichtring für eine Welle oder Stange, umfassend einen Halteflansch (1), der mit einer sich quer zu der Welle oder Stange (2) erstreckenden Wand (3) verschraubbar ist und einen Lippenring (4) aus polymerem Werkstoff aufweist, der mit dem Halteflansch (1) verbunden ist, **dadurch gekennzeichnet**, daß der Halteflansch (1) und Lippenring (4) vor der Verschraubung mittels eines abnehmbaren Zentrierrings (5) durch die Welle oder Stange (2) zentrierbar ist.

2. Dichtring nach Anspruch 1, dadurch gekennzeichnet, daß der Halteflansch (1) und/oder der Lippenring (4) mit zumindest einer umlaufenden Zentrierfläche (6) und der Zentrierring (5) mit zumindest einer dazu passenden Gegenfläche (7) versehen ist.

3. Dichtring nach einem der Ansprüche 2 bis 3, dadurch gekennzeichnet, daß die Zentrierfläche (6) sich bis in einen Bereich radial innerhalb des kleinsten Durchmessers des Halteflansches (1) erstreckt.

4. Dichtring nach einem der Ansprüche 2 bis 4, dadurch gekennzeichnet, daß die Zentrierfläche (6) und die Gegenfläche (7) trichterartig ineinander einfügbar sind.

5. Dichtring nach einem der Ansprüche 1 bis 5, dadurch gekennzeichnet, daß der Zentrierring (5) an dem Haltering (1) und/ oder dem Lippenring (4) mittels einer Schnappverbindung (8) unverlierbar festlegbar ist.

6. Dichtring nach Anspruch 5, dadurch gekennzeichnet daß die Schnappverbindung (8) einen Bestandteil der Zentrierfläche (6) und der Gegenfläche (7) bildet.

7. Dichtring nach einem der Ansprüche 2 bis 6, dadurch gekennzeichnet, daß die Zentrierfläche (6) und die Gegenfläche (7) einen Kegelwinkel von 1 bis 5° haben.

8. Dichtring nach einem der Ansprüche 1 bis 8, dadurch gekennzeichnet, daß der Zentrierring (5) aus Kunststoff besteht.

9. Einbausatz, umfassend einen Dichtring und einen davon ablösbaren Zentrierring (5) nach einem der Ansprüche 1 bis 8.
